# EUROPEAN PATENT SPECIFICATION

(11) **EP 3 872 124 B1**
(45) Date of publication and mention of the grant of the patent: **07.06.2023**
(21) Application number: 20461512.4
(22) Date of filing: 28.02.2020
(51) Int. Cl.: C08K 3/016, C08K 3/04, C08K 3/34

(54) **A THERMOPLASTIC COMPOSITE MATERIAL FOR PASSIVE FIRE PROTECTION**
THERMOPLASTISCHES VERBUNDMATERIAL FÜR DEN PASSIVEN BRANDSCHUTZ
MATÉRIAU COMPOSITE THERMOPLASTIQUE POUR UNE PROTECTION PASSIVE CONTRE LES INCENDIES

(43) Date of publication of application: 01.09.2021
(73) Proprietor: Intuseal Sp. z o.o., 05-500 Piaseczno (PL)
(72) Inventor: Kosyl, Mateusz, 05-500 Piaseczno (PL)
(74) Representative: Kancelaria Eupatent.pl Sp. z.o.o

(56) References cited:
- WO-A1-2015/159697
- US-A1- 2017 152 190
- DATABASE CA [Online] CHEMICAL ABSTRACTS SERVICE, COLUMBUS, OHIO, US; 22 November 2000 (2000-11-22), OHTSUKA, KENJI ET AL: "Fireproof wall structure", XP002799980, retrieved from STN Database accession no. 2000:819327 -& JP 2000 320044 A (SEKISUI CHEMICAL CO LTD) 21 November 2000 (2000-11-21)
- GILLANI QANDEEL FATIMA ET AL: "Effects of Halloysite Nanotube Reinforcement in Expandable Graphite Based Intumescent Fire Retardant Coatings Developed Using Hybrid Epoxy Binder System", CHINESE JOURNAL OF POLYMER SCIENCE, ZHONGGUO HUAXUEHUI, CN, vol. 36, no. 11, 14 June 2018 (2018-06-14) , pages 1286-1296, XP036596691, ISSN: 0256-7679, DOI: 10.1007/S10118-018-2148-1 [retrieved on 2018-06-14]

## Description

### TECHNICAL FIELD

The object of the present invention is a chloride-free thermoplastic composite material suitable for use as a passive fire protection. The object of the present invention is also a passive fire protection device that comprises such thermoplastic composite material.

### BACKGROUND

Polymer materials have excellent chemical and mechanical properties, therefore they are widely used in industry in applications such as constructional, automotive, agricultural or medical materials. Unfortunately, polymer materials are flammable substances, so it is very important to decrease their flammability for the users safety. For that purpose it is known in the art to use halogen containing compounds as fire retardants for polymer materials. However, halogen-containing flame retardants generate toxic and corrosive gases such as hydrogen halides (i.e. chloride containing flame retardants generate hydrogen chloride). In order to address such problem, chloride-free fire retardants are used, such as phosphate compounds or inorganic compounds.

An example of inorganic compound used as fire retardant is expandable graphite. As a result of a heat of a fire, the graphite expands and creates an intumescent layer on the surface of the material. This retards the spread of fire and minimizes the creation of toxic gases and fumes.

EP2933311 discloses a flame retardant composition that comprises a specific phosphate compounds and polyhydric alcohol compound. Phosphate compounds according to EP2933311 comprise a group ammonia or triazine derivative, as well as piperazine or piperazine ring-containing diamine.

WO2019240180 discloses the polyphosphate amine salt composition for use as an flame retardant, composition comprising an orthophosphoric acid amine salt and a polyphosphate amine salt such as melamine or piperazine, wherein it comprises 0.1 to 6.0% by weight of the orthophosphoric acid amine salt.

IN201503970(P2) discloses a flame retardant composition comprising (a) 20 to 50 parts by mass of at least one type of melamine salt selected from melamine orthophosphate, melamine pyrophosphate, melamine polyphosphate, or a mixture including two or more types of the melamine salts; 50 to 80 parts by mass of (b) at least one type of piperazine salt selected from piperazine orthophosphate, piperazine pyrophosphate, piperazine polyphosphate, or a mixture including two or more types of the piperazine salts; and component (wherein the total of the component (a) and the component (b) is 100 parts by mass) and (c) 5 and 0.01 to 5 parts by mass of a hydrotalcite compound.

The above-mentioned prior art documents also disclose addition of expandable graphite as flame retardant and anti-dripping additives to improve flame retardant composition properties. Anti-dripping additives are also specified to be vermiculite or halloysite among other additives, however the prior art documents discourage using more than 5% by weight of the combination of them.

In view of the above, it is an object of the present invention to further improve the technology of materials for passive fire protection. There is a need to develop alternative compositions of materials for passive fire protection.

### SUMMARY OF THE INVENTION

The present invention relates to a thermoplastic composite material and a passive fire protection device according to the appended claims.

### DETAILED DESCRIPTION

According to the present invention, a thermoplastic composite material comprises a polymer matrix material that has Vicat softening point below 50°C, expandable graphite, vermiculite and halloysite. Polymer matrix materials with such low Vicat softening point were, so far, not used in flame retardant composites comprising expandable graphite, vermiculite and halloysite.

Conventionally, materials based mainly on PVC have been used due to the flame retardancy of the PVC itself. However, during fire PVC releases hydrogen chloride while decomposing.

It is advantageous for the expanding additives used herein to reduce the plasticization temperature as low as possible. Additives used according to the present invention are already beginning to expand in an temperature above 100°C. Expandable graphite and vermiculite contain water trapped in their structure, so during the heating process water evaporates rapidly, causing the separation of individual layers in the structures expandable graphite and vermiculite. Halloysite in combination with expandable graphite and vermiculite has an synergistic effect of improved flame retardancy. Halloysite causes surface vitrification of the burning composite, thus it limits access of the flame to the inner parts of the yet unburned material. The use of matrix materials with a very low Vicat softening point enables to process the material while maintaining its full expanding capacity (during processing there is no risk of exceeding the initial expansion temperature of the expandable additives).

Preferably, according to the present invention, a polymer matrix material is polyvinyl butyral (PVB) (in particular, PVB comprising from 10 to 80% of vinyl bytyral) or ethylene-vinyl acetate (EVA) copolymer. The advantage of using those materials is low temperature of processing, high flexibility even at temperatures below 0°C and there is no need to use chemical plasticizers in such materials. More preferably, if ethylene-vinyl acetate (EVA) copolymer is used as polymer matrix, it comprises 10-80% by weight of vinyl acetate. The advantage of using such EVA copolymer is low temperature of processing, high flexibility even at temperatures below 0°C and there is no need to use chemical plasticizers in such materials.

Polyvinyl butyral (PVB) is an amorphous copolymer of vinyl butyral, vinyl alcohol and vinyl acetate. More preferably, if polyvinyl butyral (PVB) is used as polymer matrix, it comprises 10-80% by weight of vinyl butyral. The advantage of using such polyvinyl butyral (PVB) is low temperature of processing, high flexibility even at temperatures below 0°C and there is no need to use chemical plasticizers in such materials.

The heat resistance of thermoplastics can be assessed using the Vicat test. This test is also called the Vicat softening point determination. It involves determination of a temperature at which a steel blunt needle sinks into the surface of the sample to a depth of 1 mm with uniform growth temperature. The Vicat softening point may vary depending on the Vicat test conditions. According to the present invention the Vicat softening point was determined for all of the embodiments in Vicat test as described in PN-EN ISO 3146:2002 Method A.

### EXAMPLES

All of the following examples of composite compositions were produced using a conventional method, which is known in the art. Polymer matrices were heated to a plasticization temperature. After achieving the respective plasticization temperature (not more than 100°C), additives were sequentially introduced into each plasticized matrix: expanded graphite, halloysite and vermiculite. Thoroughly mixed compositions were substantially granulated. After that the granules were further processed, i.e. extruded. Any method suitable for production of such thermoplastic composites can be used according to the present invention.

The final materials were characterized by determining their: Shore A hardness, tensile strength, initial expansion temperature as well as relative expansion volume. Shore A hardness was measured as in PN-EN ISO 868:2005. Tensile strength was measures as in PN-EN ISO 527:2012.

Initial expansion temperature was tested as follows: A 2 mm thick sample was placed in a closed but unsealed ceramic crucible is and was heated at temperature increase rate of 2°C/min. A continuous measurement of the displacement of the upper edge of the crucible closure is made until it moves at least 0.2mm. Initial expansion temperature was determined as the temperature at which a 10% increase in volume of the tested composition was observed.

Relative expansion volume was tested as follows: a sample was placed in a ceramic crucible and subsequently it was heated at the temperature of 1200°C for 30 minutes. Relative expansion volume was determined as volume increase in relation to the initial volume of the test sample.

Detailed compositions according to the present invention are shown in the examples 1-8 below.

The materials provided in the example embodiments as discussed below are characterized by the following properties:
- Shore A hardness - measured according to PN-EN ISO 868:2005 standard;
- Tensile strength - measured according to PN-EN ISO 527:2012 standard;
- Initial expansion temperature - measured by using a heated crucible, which is heated by 2°C/min. The initial expansion temperature is the temperature at which the volume of the heated mixture increases by 10% from the initial volume. A sample having a thickness of 2 mm was placed in a closed, but not sealed, ceramic crucible and heated up. The level of the top layer of the closure of the crucible was continuously measured until it raised by 0,2mm;
- Relative expansion volume - measured by using a heated crucible. A sample having an ambient room temperature was placed in a ceramic crucible and the crucible was heated up to 1200oC by 30 minutes. Next, the increase in volume in relation to the initial volume was measured. For example, an increase of initial volume from 10 mm3 to 23 mm3 results in a relative expansion volume of 130%.

### EXAMPLE 1

**Table 1 the share of individual components according to example 1**

| **Component** | **Content [%_{wt}]** |
|---|---|
| EVA (60% VA) | 70 |
| Expandable graphite | 10 |
| Halloysite | 10 |
| Vermiculite | 10 |

The results of the tests performed on the example 1 are: Shore A hardness: 52°ShA, tensile strength: 15MPa, initial expansion temperature: 130°C and relative expansion volume: 130%.

### EXAMPLE 2

**Table 2 the share of individual components according to example 2**

| **Component** | **Content [%_{wt}]** |
|---|---|
| EVA (60% VA) | 30 |
| Expandable graphite | 30 |
| Halloysite | 10 |
| Vermiculite | 30 |

The results of the tests performed on an example 2 are: Shore A hardness: 72°ShA, tensile strength: 11MPa, initial expansion temperature: 130°C and relative expansion volume: 2730%.

### EXAMPLE 3

**Table 3 the share of individual components according to example 3**

| **Component** | **Content [%_{wt}]** |
|---|---|
| EVA (60% VA) | 30 |
| Expandable graphite | 20 |
| Halloysite | 10 |
| Vermiculite | 40 |

The results of the tests performed on an example 3 are: Shore A hardness: 68°ShA, tensile strength: 8MPa, initial expansion temperature: 150°C and relative expansion volume: 3270%.

### EXAMPLE 4

**Table 4 the share of individual components according to example 4**

| **Component** | **Content [%_{wt}]** |
|---|---|
| EVA (28% VA) | 30 |
| Expandable graphite | 20 |
| Halloysite | 10 |
| Vermiculite | 40 |

The results of the tests performed on an example 4 are: Shore A hardness: 92°ShA, tensile strength: 17MPa, initial expansion temperature: 150°C and relative expansion volume: 3300%.

### EXAMPLE 5

**Table 5 the share of individual components according to example 5**

| **Component** | **Content [%_{wt}]** |
|---|---|
| EVA (28% VA) | 30 |
| Expandable graphite | 30 |
| Halloysite | 5 |
| Vermiculite | 35 |

The results of the tests performed on an example 5 are: Shore A hardness: 93°ShA, tensile strength: 8MPa, initial expansion temperature: 142°C and relative expansion volume: 4980%.

### EXAMPLE 6

**Table 6 the share of individual components according to example 6**

| **Component** | **Content [%_{wt}]** |
|---|---|
| PVB (70% VB) | 30 |
| Expandable graphite | 30 |
| Halloysite | 5 |
| Vermiculite | 35 |

The results of the tests performed on an example 6 are: Shore A hardness: 82°ShA, tensile strength: 11MPa, initial expansion temperature: 133°C and relative expansion volume: 4920%.

### EXAMPLE 7

**Table 7 the share of individual components according to example 6**

| **Component** | **Content [%_{wt}]** |
|---|---|
| PVB (10%VB) | 30 |
| Expandable graphite | 30 |
| Halloysite | 5 |
| Vermiculite | 35 |

The results of the tests performed on an example 7 are: Shore A hardness: 22°ShD, tensile strength: 14MPa, initial expansion temperature: 142°C and relative expansion volume: 3840%.

### EXAMPLE 7

**Table 7 the share of individual components according to example 6**

| **Component** | **Content [%_{wt}]** |
|---|---|
| PVB (70%VB) | 70 |
| Expandable graphite | 10 |
| Halloysite | 10 |
| Vermiculite | 10 |

The results of the tests performed on an example 8 are: Shore A hardness: 43°ShA, tensile strength: 6MPa, initial expansion temperature: 143°C and relative expansion volume: 130%.

In accordance to examples 1 to 8, it is visible that compositions according to the present invention expand in volume in a satisfactory manner.

All of the tested composites according to examples 1-8 resulted in fire resistance of EI240 for pipes with diameters up to 200 mm made of HDPE, PVC, PP. The fire resistance was measured according to PN-EN 1366-3: 2010.

The material according to the invention is an elastic polymer material that is suitable for use as a passive fire protection device to protect installation passages (e.g. as a gasket for protecting sewage pipes) against fire penetration. For example, the device may have a form of a fire-protective:
- band, tape, flange or bandage for flammable and/or non-flammable pipes;
- tape for flammable and/or non-flammable pipes;
- seal for doors;
- vent grille;
- elastic filler for dilatations and/or linear junctions;
- dilatation rope for dilatations and/or linear junctions;
- cover for electrical outlets;
- plaster;
- cable fitting; or
- lighting cover.

## Claims

1. A thermoplastic composite material comprising a polymer matrix material, expandable graphite, vermiculite and halloysite, **characterized in that** it comprises:
- 30%-70% by weight of the polymer matrix material having a Vicat softening point below 50 °C (determined as described in PN-EN ISO 3146:2002 Method A);
- 10-30% by weight of expandable graphite;
- 10-40% by weight of vermiculite; and
- 5-10% by weight of halloysite.

2. The thermoplastic composite material according to claim 1, wherein the polymer matrix material is polyvinyl butyral (PVB).

3. The thermoplastic composite material according to claim 2, wherein the polyvinyl butyral (PVB) comprises 10-80% by weight of vinyl butyral.

4. The thermoplastic composite material according to claim 1, wherein the polymer matrix material is ethylene-vinyl acetate (EVA) copolymer.

5. The thermoplastic composite material according to claim 4, wherein the ethylene-vinyl acetate (EVA) copolymer comprises 10-80% by weight of vinyl acetate.

6. The thermoplastic composite material according to claim 1, comprising:
- 70% by weight of ethylene-vinyl acetate (EVA);
- 10% by weight of expandable graphite;
- 10% by weight of vermiculite; and
- 10% by weight of halloysite.

7. The thermoplastic composite material according to claim 1, comprising:
- 30% by weight of ethylene-vinyl acetate (EVA);
- 30% by weight of expandable graphite;
- 30% by weight of vermiculite; and
- 10% by weight of halloysite.

8. The thermoplastic composite material according to claim 1, comprising:
- 30% by weight of ethylene-vinyl acetate (EVA);
- 20% by weight of expandable graphite;
- 40% by weight of vermiculite; and
- 10% by weight of halloysite.

9. The thermoplastic composite material according to claim 1, comprising:
- 30% by weight of ethylene-vinyl acetate (EVA);
- 20% by weight of expandable graphite;
- 40% by weight of vermiculite; and
- 10% by weight of halloysite.

10. The thermoplastic composite material according to claim 1, comprising:
- 30% by weight of ethylene-vinyl acetate (EVA);
- 30% by weight of expandable graphite;
- 35% by weight of vermiculite; and
- 5% by weight of halloysite.

11. The thermoplastic composite material according to claim 1, comprising:
- 30% by weight of polyvinyl butyral (PVB, 70%VB);
- 30% by weight of expandable graphite;
- 35% by weight of vermiculite; and
- 5% by weight of halloysite.

12. The thermoplastic composite material according to claim 1, comprising:
- 30% by weight of polyvinyl butyral (PVB, 10%VB);
- 30% by weight of expandable graphite;
- 35% by weight of vermiculite; and
- 5% by weight of halloysite.

13. The thermoplastic composite material according to claim 1, comprising:
- 70% by weight of polyvinyl butyral (PVB, 70%VB);
- 10% by weight of expandable graphite;
- 10% by weight of vermiculite; and
- 10% by weight of halloysite.

14. A passive fire protection device, comprising the thermoplastic composite material according to any of the preceding claims.

15. The passive fire protection device according to claim 14, having a form of a fire protective: band, tape, flange or bandage for flammable and/or non-flammable pipes; tape for flammable and/or non-flammable pipes; seal for doors; vent grille; elastic filler for dilatations and/or linear junctions; dilatation rope for dilatations and/or linear junctions; cover for electrical outlets; plaster; cable fitting; or lighting cover.

## Patentansprüche

1. Thermoplastisches Verbundmaterial, umfassend ein Polymermatrixmaterial, expandierbaren Graphit, Vermiculit und Halloysit, **dadurch gekennzeichnet, dass** es Folgendes umfasst:
- 30-70 Gewichtsprozent des Polymermatrixmaterials, das einen Vicat-Erweichungspunkt unter 50 °C aufweist (bestimmt wie beschrieben in PN-EN ISO 3146:2002 Methode A);
- 10-30 Gewichtsprozent expandierbaren Graphit;
- 10-40 Gewichtsprozent Vermiculit; und
- 5-10 Gewichtsprozent Halloysit.

2. Thermoplastisches Verbundmaterial nach Anspruch 1, wobei das Polymermatrixmaterial Polyvinylbutyral (PVB) ist.

3. Thermoplastisches Verbundmaterial nach Anspruch 2, wobei das Polyvinylbutyral (PVB) 10-80 Gewichtsprozent Vinylbutyral umfasst.

4. Thermoplastisches Verbundmaterial nach Anspruch 1, wobei das Polymermatrixmaterial ein Ethylenvinylacetat (EVA)-Copolymer ist.

5. Thermoplastisches Verbundmaterial nach Anspruch 4, wobei das Ethylenvinylacetat-Copolymer (EVA) 10-80 Gewichtsprozent Vinylacetat umfasst.

6. Thermoplastisches Verbundmaterial nach Anspruch 1, umfassend:
- 70 Gewichtsprozent Ethylenvinylacetat (EVA);
- 10 Gewichtsprozent expandierbaren Graphit;
- 10 Gewichtsprozent Vermiculit; und
- 10 Gewichtsprozent Halloysit.

7. Thermoplastisches Verbundmaterial nach Anspruch 1, umfassend:
- 30 Gewichtsprozent Ethylenvinylacetat (EVA);
- 30 Gewichtsprozent expandierbaren Graphit;
- 30 Gewichtsprozent Vermiculit; und
- 10 Gewichtsprozent Halloysit.

8. Thermoplastisches Verbundmaterial nach Anspruch 1, umfassend:
- 30 Gewichtsprozent Ethylenvinylacetat (EVA);
- 20 Gewichtsprozent expandierbaren Graphit;
- 40 Gewichtsprozent Vermiculit; und
- 10 Gewichtsprozent Halloysit.

9. Thermoplastisches Verbundmaterial nach Anspruch 1, umfassend:
- 30 Gewichtsprozent Ethylenvinylacetat (EVA);
- 20 Gewichtsprozent expandierbaren Graphit;
- 40 Gewichtsprozent Vermiculit; und
- 10 Gewichtsprozent Halloysit.

10. Thermoplastisches Verbundmaterial nach Anspruch 1, umfassend:
- 30 Gewichtsprozent Ethylenvinylacetat (EVA);
- 30 Gewichtsprozent expandierbaren Graphit;
- 35 Gewichtsprozent Vermiculit; und
- 5 Gewichtsprozent Halloysit.

11. Thermoplastisches Verbundmaterial nach Anspruch 1, umfassend:
- 30 Gewichtsprozent Polyvinylbutyral (PVB, 70 % VB);
- 30 Gewichtsprozent expandierbaren Graphit;
- 35 Gewichtsprozent Vermiculit; und
- 5 Gewichtsprozent Halloysit.

12. Thermoplastisches Verbundmaterial nach Anspruch 1, umfassend:
- 30 Gewichtsprozent Polyvinylbutyral (PVB, 10 % VB);
- 30 Gewichtsprozent expandierbaren Graphit;
- 35 Gewichtsprozent Vermiculit; und
- 5 Gewichtsprozent Halloysit.

13. Thermoplastisches Verbundmaterial nach Anspruch 1, umfassend:
- 70 Gewichtsprozent Polyvinylbutyral (PVB, 70 % VB);
- 10 Gewichtsprozent expandierbaren Graphit;
- 10 Gewichtsprozent Vermiculit; und
- 10 Gewichtsprozent Halloysit.

14. Passive Brandschutzvorrichtung, umfassend das thermoplastische Verbundmaterial nach einem der vorherigen Ansprüche.

15. Passive Brandschutzvorrichtung nach Anspruch 14 in Form eines Brandschutzbands, eines Bands, eines Flanschs oder einer Bandage für brennbare und/oder nicht brennbare Rohre; eines Bands für brennbare und/oder nicht brennbare Rohre; einer Dichtung für Türen; eines Lüftungsgitters; eines elastischen Füllmaterials für Dilatationen und/oder lineare Verbindungen; eines Dilatationsseils für Dilatationen und/oder lineare Verbindungen; einer Abdeckung für elektrische Steckdosen; eines Pflasters; eines Kabelanschlusses; oder einer Beleuchtungsabdeckung.

## Revendications

1. Matériau composite thermoplastique comprenant un matériau à matrice polymère, du graphite expansible, de la vermiculite et de l'halloysite, **caractérisé en ce qu'**il comprend :
- 30 % à 70 % en poids du matériau de matrice polymère possédant un point de ramollissement Vicat
inférieure à 50°C (déterminée comme décrit dans PN-EN ISO 3146:2002 Procédé A) ;
- 10 à 30 % en poids de graphite expansible ;
- 10 à 40 % en poids de vermiculite ; et
- 5 à 10 % en poids d'halloysite.

2. Matériau composite thermoplastique selon la revendication 1, ledit matériau de matrice polymère étant du poly(butyral de vinyle) (PVB).

3. Matériau composite thermoplastique selon la revendication 2, ledit poly(butyral de vinyle) (PVB) comprenant de 10 à 80 % en poids de butyral de vinyle.

4. Matériau composite thermoplastique selon la revendication 1, ledit matériau de matrice polymère étant un copolymère éthylène-acétate de vinyle (EVA).

5. Matériau composite thermoplastique selon la revendication 4, ledit copolymère éthylène-acétate de vinyle (EVA) comprenant 10 à 80 % en poids d'acétate de vinyle.

6. Matériau composite thermoplastique selon la revendication 1, comprenant :
- 70 % en poids d'éthylène-acétate de vinyle (EVA) ;
- 10 % en poids de graphite expansible ;
- 10 % en poids de vermiculite ; et
- 10 % en poids d'halloysite.

7. Matériau composite thermoplastique selon la revendication 1, comprenant :
- 30 % en poids d'éthylène-acétate de vinyle (EVA) ;
- 30 % en poids de graphite expansible ;
- 30 % en poids de vermiculite ; et
- 10 % en poids d'halloysite.

8. Matériau composite thermoplastique selon la revendication 1, comprenant :
- 30 % en poids d'éthylène-acétate de vinyle (EVA) ;
- 20 % en poids de graphite expansible ;
- 40 % en poids de vermiculite ; et
- 10 % en poids d'halloysite.

9. Matériau composite thermoplastique selon la revendication 1, comprenant :
- 30 % en poids d'éthylène-acétate de vinyle (EVA) ;
- 20 % en poids de graphite expansible ;
- 40 % en poids de vermiculite ; et
- 10 % en poids d'halloysite.

10. Matériau composite thermoplastique selon la revendication 1, comprenant :
- 30 % en poids d'éthylène-acétate de vinyle (EVA) ;
- 30 % en poids de graphite expansible ;
- 35 % en poids de vermiculite ; et
- 5 % en poids d'halloysite.

11. Matériau composite thermoplastique selon la revendication 1, comprenant :
- 30 % en poids de poly(butyral de vinyle) (PVB, 70 % VB) ;
- 30 % en poids de graphite expansible ;
- 35 % en poids de vermiculite ; et
- 5 % en poids d'halloysite.

12. Matériau composite thermoplastique selon la revendication 1, comprenant :
- 30 % en poids de poly(butyral de vinyle) (PVB, 10 % VB) ;
- 30 % en poids de graphite expansible ;
- 35 % en poids de vermiculite ; et
- 5 % en poids d'halloysite.

13. Matériau composite thermoplastique selon la revendication 1, comprenant :
- 70 % en poids de poly(butyral de vinyle) (PVB, 70 % VB) ;
- 10 % en poids de graphite expansible ;
- 10 % en poids de vermiculite ; et
- 10 % en poids d'halloysite.

14. Dispositif de protection passive contre l'incendie, comprenant le matériau composite thermoplastique selon l'une quelconque des revendications précédentes.

15. Dispositif de protection passive contre l'incendie selon la revendication 14, possédant une forme de protection contre l'incendie : bande, ruban, bride ou bandage pour tuyaux inflammables et/ou ininflammables ; ruban pour tuyaux inflammables et/ou ininflammables ; joint d'étanchéité pour portes ; grille d'aération ; remplissage élastique pour dilatations et/ou jonctions linéaires ; corde de dilatation pour dilatations et/ou jonctions linéaires ; couvercle pour prises électriques ; plâtre ; raccord de câble ; ou couvercle d'éclairage.
